# EUROPEAN PATENT APPLICATION

(11) **EP 1 502 901 A1**
(43) Date of publication of application: **02.02.2005**
(21) Application number: 03717659.1
(22) Date of filing: 18.04.2003
(51) Int. Cl.: C03C 23/00, C03C 14/00

(54) **METHOD OF FORMING SPLIT PHASE AREA INSIDE GLASS**

(30) Priority: 25.04.2002 JP 2002124725
(71) Applicant: Japan Science and Technology Agency, Kawaguchi-shi, Saitama 332-0012 (JP); Central Glass Company, Limited, Ube-shi, Yamaguchi 755-0001 (JP)
(72) Inventor: Miura, Kiyotaka, Ube-shi, Yamaguchi 755-0039 (JP); Fujiwara, Seiji, Ube-shi, Yamaguchi 755-0004 (JP); Hirao, Kazuyuki, Kyoto-shi, Kyoto 606-8204 (JP)
(74) Representative: Röthinger, Rainer, Dipl.-Phys.
(86) International application number: PCT/JP2003/005015
(87) International publication number: WO 2003/091176

(57) **Abstract**

When separated phases are formed in a glass by a nucleation and growth mechanism, a phase separation region only in a small desired area is difficult to form by a conventional method, in which the entire glass is heated. Thus, an optical waveguide structure, or a photonic crystal, which requires an orderly arrangement of high-refractive-index regions, cannot be manufactured.

The present invention provides a method for forming a phase separation region by converging a laser pulse in a glass containing a metastable immiscible phase to separate only an area at a focal point of the laser or in the vicinity of the focal point into phases. The focal point of the laser is moved continuously or intermittently relative to the glass to form a linear phase separation region or a dotted phase separation region in two or three dimensions in the glass. The pulse width of the laser is preferably between 10 femtoseconds and 10 picoseconds.

## Description

### Technical Field

The present invention relates to a method for forming a phase separation region in a glass by converging a laser pulse in a glass containing a metastable immiscible phase.

### Background Art

Phase separation is a phenomenon in which a single-phase supercooled liquid separates into at least two liquid phases. Phase separation in a temperature range below a liquid phase temperature is called metastable immiscibility, and phase separation in a temperature range above the liquid phase temperature is called stable immiscibility. A "homogeneous glass containing a metastable immiscible phase" looks homogeneous as a glass (in a solid state), but potentially has a metastable immiscible phase.

In a glass containing a stable immiscibility region, the melt itself is in a phase separation state and therefore a single-phase glass cannot be prepared even by quenching. However, in a glass only containing a metastable immiscible region, a homogeneous single-phase glass can be prepared by achieving a supercooled liquid state before phase separation occurs.

In one known method for inducing the phase separation of a homogeneous glass containing a metastable immiscible phase, a borosilicate glass that is not phase-separated yet is heat-treated at a phase separation temperature into a SiO₂-rich phase and a B₂O₃-rich phase. The phase separation phenomenon is utilized to prepare porous glasses. Furthermore, in an attempt to utilize phase separation to provide a glass with functionality, optical and electrical anisotropy is imparted by phase separation under uniaxial stretching, which forms an axially stretched phase separation region (Non-patent Document 1).

A microcrack in a glass resulting from optical damage or microfracture caused by laser radiation is known to change a refractive index on the periphery of the damaged or fractured area. A defect in a glass generated by light radiation is also known to change density and therefore a refractive index (Patent Documents 1-7).

Non-patent Document 1 T. Takamori and M. Tomozawa, J, Am. Ceram. Soc., 59, 377 (1976)

Patent Document 1 Japanese Unexamined Patent Application Publication No. 7-136782

Patent Document 2 Japanese Unexamined Patent Application Publication No. 8-220688 (Japanese Patent No. 2961126)

Patent Document 3 Japanese Unexamined Patent

Application Publication No. 11-109148

Patent Document 4 Japanese Unexamined Patent Application Publication No. 2000-56112

Patent Document 5 Japanese Unexamined Patent Application Publication No. 2001-236002

Patent Document 6 Japanese Unexamined Patent Application Publication No. 2001-236644

Patent Document 7 Japanese Unexamined Patent Application Publication No. 2002-22980

### Disclosure of Invention

The present invention basically differs from the techniques described in the Background Art in that the variation in a refractive index according to the inventive method results from the formation of a phase separation region having a different composition and not from a crack or variation in density.

The phase separation has two mechanisms of formation: a spinodal decomposition mechanism in which the phase separation proceeds predominantly by diffusion without nucleation, and a nucleation and growth mechanism in which the phase separation proceeds around a nucleus formed by nucleation. In a conventional phase separation induced by the uniform heat-treatment over a glass, the phase separation tends to proceed by the spinodal decomposition, forming two separated phases intricately entangled with each other on the order of angstroms.

In the preparation of a waveguide utilizing phase separation, for example, a high-refractive-index phase must continuously be separated in a desired shape and size. However, it is difficult to form such a waveguide structure in a glass when two separated phases generated by the spinodal decomposition are intricately entangled with each other on the order of angstroms.

Furthermore, even when a separated phase is grown by the nucleation and growth mechanism, it is also difficult to form a phase separation region only in a small desired area by heating over the glass according to the conventional method. Thus, a photonic crystal, which requires an orderly arrangement of high-refractive-index regions, cannot be manufactured.

To achieve the goal, the present invention is characterized in that a pulsed laser having a wavelength other than that of an intrinsic absorption of the glass is converged and is transmitted into a glass containing a metastable immiscible phase, for example, through an objective lens, and transfers its energy only to the vicinity of a focal point via multiphoton absorption, thus phase-separating only the vicinity of the focal point. The resulting separated phase having a refractive index different from that of its surrounding area can be grown in a linear or dotted form in a desired size and shape in the glass, forming a phase-separated region for use in an optical waveguide or a photonic crystal.

### (Operation)

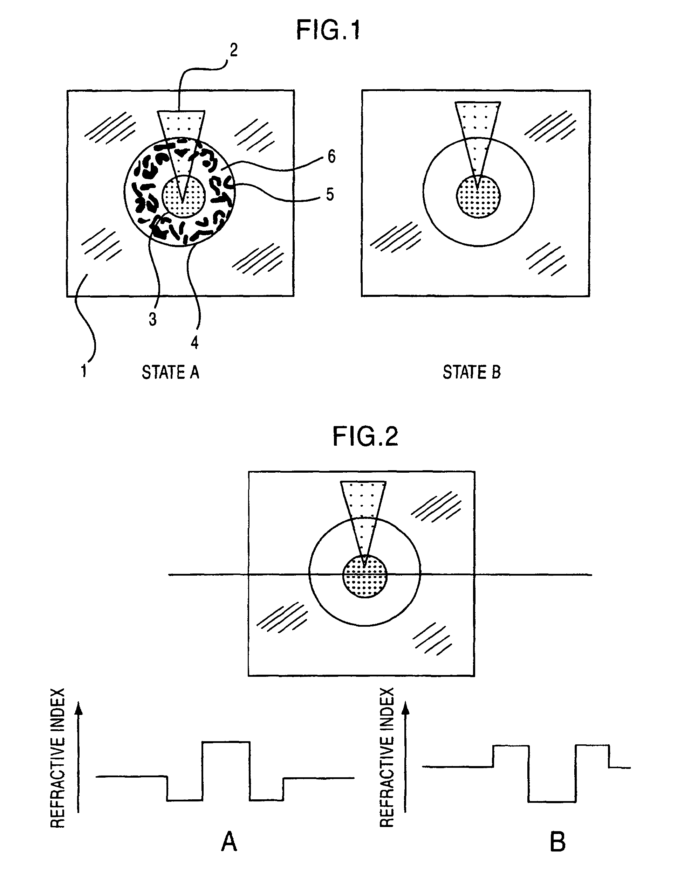

Even in the case of a glass composition for which phase separation proceeds by the spinodal decomposition while two separated phases are intricately entangled with each other during uniform heating over the glass, a locally converged pulsed laser with an adjusted pulse width, radiation energy, or repetition frequency allows for a phase separation in which two separated phases are not entangled and are isolated from each other. This mechanism will be further described with reference to Fig. 1.

If the laser energy is accumulated at a focal point in the glass far before the thermal energy generated by the laser radiation is dissipated by conduction, the vicinity of the focal point will have a higher temperature and a higher pressure than the surroundings. When a pulsed laser 2 is converged into a homogeneous glass 1 containing a metastable immiscible phase, the laser energy is transferred only to the periphery of the focal point by multiphoton absorption, thus melting the glass at the vicinity of the focal point 3 and providing its surrounding area 4 with a condition for inducing phase separation.

In general, light absorption requires that the wavelength of light should be the same as the absorption wavelength of a material. In this case, the material absorbs the light energy as one photon. However, even when the absorption wavelength and the wavelength of light are not identical, the material can absorb the light energy as two or three photons. This is referred to as multiphoton absorption.

Since phase separation does not occur above a liquid phase temperature in a glass containing a metastable immiscible phase, laser radiation allows the focal area to melt uniformly and induce phase separation around the focal area. Two separated phases in the phase separation region have different glass compositions and therefore have different refractive indices and different liquid phase temperatures. This causes a phase 5 having a lower melting point to move to and melt in the central melt phase, and also causes a phase 6 having a higher melting point to move outward. Thus, a phase separation state A in Fig. 1 changes into a state B during continuous laser radiation.

As a result, the vicinity of the focal point of the laser radiation and the surroundings have a clear boundary and form a phase separation region having different glass compositions. When the central phase has a high refractive index, the cross-section of the phase separation region has a refractive index distribution as shown in Fig. 2A. When the central phase has a low refractive index, the cross-section has a refractive index distribution as shown in Fig. 2B.

### Brief Description of the Drawings

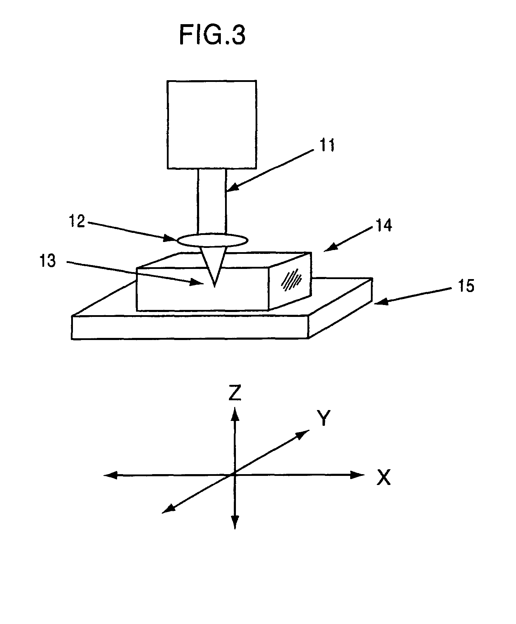

Fig. 1 is a schematic diagram illustrating a mechanism of phase separation of a glass according to a method of the present invention. Fig. 2 is a graph showing one example of a refractive index distribution at a cross-section of a phase separation region according to a method of the present invention. Fig. 3 is a schematic diagram illustrating a method for forming a phase separation region according to each example.

### Best Mode for Carrying Out the Invention

The present invention provides a method for locally phase-separating a focal area or its vicinity in a glass containing a metastable immiscible phase by the irradiation of a laser pulse.

A homogeneous glass can be prepared from Ge-GeO₂, R₂O-SiO₂ (R: Li, Na), BaO-SiO₂, R₂O-B₂O₃ (R: Li, Na, K, Rb, Cs), RF-BeF₂ (R: Li, Na, K, Rb, Cs), Na₂O-CaO-SiO₂, Na₂O-B₂O₃-SiO₂, PbO-GeO-SiO₂, Ge-Te-Sb, Ge-Te-As, or other glasses that contain a metastable immiscible phase. A laser pulse on these glasses allows phase separation to occur only at an irradiated area.

The pulse width, pulse energy, or repetition frequency of a laser is not limited to a specific value and is determined so that an energy sufficient to melt a focal area to induce phase separation is transferred to a glass, and that a sufficient heat for the growth of phase separation is accumulated. Preferably, the pulse width of a laser is 10 picoseconds or less to prevent dielectric breakdown and cracking in the glass. However, a pulse width less than 10 femtoseconds is difficult to maintain and is therefore not practical. When the energy per pulse is constant, the peak power of a pulsed laser decreases with increasing the pulse width. Thus, the peak energy of a laser pulse should be large to maintain the peak power density with increased pulse width. A laser having the same wavelength as that of the intrinsic absorption of a glass is absorbed into a surface of the glass and cannot provide a phase separation region exclusively inside the glass.

The peak power of a pulsed laser is an output energy (J) per pulse divided by a pulse width (second) and is expressed in watts (W). The peak power density is a peak power per unit area (cm²) and is expressed in W/cm². When a pulsed laser having a sufficient peak energy for phase separation is converged in a solid material, a pulse width greater than 10 picoseconds may generate a thermal shock and cause the failure of the material.

The size of a phase separation region or the phase separation speed may be controlled by changing the pulse width, pulse energy, or repetition frequency of a laser. Preferably, the wavelength of a laser is different from that of the intrinsic absorption of a glass. However, when the amount of a laser absorbed between a glass surface and a focal point is 20% or less, a phase separation region can be formed only in the vicinity of the focal point.

Furthermore, heating over a glass to a temperature at which no phase separation occurs enables a local phase separation with a low-power pulsed laser and increases the speed of phase separation.

In general, phase separation generates two or more phases mixed on the order of angstroms to micrometers. These phases have no effect on visible to infrared light or are just scattering factors. Thus, such phase separation has no use in optical applications. A method for forming a phase separation region in a glass according to the present invention allows a single separated phase to grow to a certain size. The present method can also form a phase separation region continuously or regularly in a desired position. Thus, such phase separation can be utilized to control the guide, reflection, or refraction of light.

In addition, moving the focal point of a laser continuously or intermittently in a three-dimensional XYZ space relative to a glass can generate a two-dimensional or three-dimensional phase separation region of any shape and any size, such as a linear phase separation region or a dotted phase separation region, in the glass.

The control of the guide, reflection, or refraction of light utilizing the phase separation according to the present method has little effect when the regional size is less than 200 nm. Thus, in such an application, one of two or more separated phases preferably grows to have a regional size of 200 nm or more.

Furthermore, two or more unclearly separated or mixed phases at a focal point of a laser or in the vicinity thereof produce an unclear boundary, making a design to control the guide, reflection, or refraction of light difficult.

### (EXAMPLES)

Examples of the present invention will now be described with reference to Fig. 3. These examples are not intended to limit the present invention.

### EXAMPLE 1

A grinded alkali borosilicate glass sample 14 with dimensions of 30 x 30 x 15 mm was prepared as a glass containing a metastable immiscibility phase. Light emitted from an argon laser excited Ti:sapphire laser was used as a pulsed laser 11 for changing a refractive index. The light had a pulse energy of 1 µJ, a cycle period of 250 kHz, and a wavelength of 800 nm.

This pulsed laser was converged to about 2 µm in size via an objective lens 12 (NA = 0.8, magnification of 50) and was applied into the glass sample 14 on a motorized XYZ stage 15 for 10 minutes. Phase separation was observed in a small area having a diameter of about 7 µm around a focal point 13.

Observation with an optical microscope showed that this phase separation region had different phases with a clear boundary at the focal point and its vicinity. The glass sample 14 was then cut and grinded so that the phase separation region appeared on the surface. EPMA line analysis of compositions of each phase in the borosilicate glass sample 14 showed that a central phase was mainly composed of boric acid and its surrounding phase was mainly composed of quartz.

### EXAMPLE 2

The glass sample 14 was continuously irradiated with the laser under the same conditions as in EXAMPLE 1, except that the glass sample 14 was scanned in the X direction while the YZ axes were fixed. This continuously formed two separated phases in the glass sample 14.

### EXAMPLE 3

The glass sample 14 was irradiated with the laser under the same conditions as in EXAMPLE 1, except that the objective lens was replaced with one having NA of 0.4 and a magnification of 20, and that the glass sample 14 was scanned in the Z direction while fixed on the XY axes. The pulse width of the laser was adjusted to the penetration depth so as to maintain the pulse width in the glass sample 14 constant. A phase separation region was linearly formed or grown in the Z direction, as in the scanning in the X direction.

### EXAMPLE 4

A linear phase separation region was formed in a PbO-GeO₂-SiO₂ glass in place of the alkali borosilicate glass sample 14 in EXAMPLE 3. Light incident from an edge of the linear phase separation region was detected at the opposite edge as an outgoing light. This demonstrated that this linear phase separation region had an optical waveguide structure.

### EXAMPLE 5

A grinded alkali borosilicate glass sample 14 with dimensions of 20 x 20 x 1 mm was prepared as a glass containing a metastable immiscible phase. A laser pulse having an average power of 50 mW, a wavelength of 600 nm, and a pulse width of 50 femtoseconds was converged to about 1 µm in size via a water immersion objective (NA = 0.9, magnification of 100) and was applied into a glass sample 14 on a motorized XYZ stage. The glass sample 14 was preheated at a glass transition temperature with a heater mounted on the XYZ stage before laser radiation. A phase separation region having a diameter of about 20 µm was observed around a focal point.

### EXAMPLE 6

The glass sample 4, which was the same as that in EXAMPLE 5, was fixed on the Z axis so that a laser focal point was positioned near the bottom of the sample. While the sample was moved on an XY plane at 10 µm/s, a Q switch, mode lock Ti:sapphire laser excited by an argon ion laser (20W) was regeneratively amplified to emit a laser pulse at a cycle period of 10 pulses per second. Then, a motor-driven stage was moved by 500 µm in the Z direction (in such a direction that the focal point of the laser moved to the top of the glass sample 14), and the sample was irradiated with the laser on an XY plane as described above. This scanning procedure was repeated five times.

Finally, this produced five layers of phase separation regions that were regularly arranged on the XY planes with a center distance between adjacent regions being 1 µm. Observation with a confocal laser scanning microscope showed that the regions having a varied refractive index in each layer had a uniform size of 400 nm.

### Industrial Applicability

As described above, a method for forming a phase separation region according to the present invention can induce phase separation in a small desired area in a glass containing a metastable immiscible phase without heating the entire glass. In addition, the present method can also be used to form a linear phase separation region or a dotted phase separation region in a glass. The linear phase separation region or the dotted phase separation region has a different refractive index from the surroundings. The present method is useful for preparing a step-index optical waveguide or a photonic crystal having regularly arranged high-refractive-index regions.

## Claims

1. A method for forming a phase separation region, comprising:
converging a laser pulse in a glass containing a metastable immiscible phase to separate only an area at a focal point of the laser or in the vicinity of the focal point into phases.

2. The method for forming a phase separation region according to Claim 1, wherein one of the two or more separated phases in the phase separation region has a size of 200 nm or more.

3. The method for forming a phase separation region according to Claim 1, wherein the two or more phases at a focal point of the laser or in the vicinity of the focal point are clearly separated.

4. The method for forming a phase separation region according to any of Claims 1 through 3, wherein the focal point of the laser is moved continuously or intermittently relative to the glass to form a linear phase separation region or a dotted phase separation region in two or three dimensions in the glass.

5. The method for forming a phase separation region according to Claim 1, wherein the glass containing a metastable immiscible phase is Ge-GeO₂, R₂O-SiO₂ (R: Li, Na), BaO-SiO₂, R₂O-B₂O₃ (R: Li, Na, K, Rb, Cs), RF-BeF₂ (R: Li, Na, K, Rb, Cs), Na₂O-CaO-SiO₂, Na₂O-B₂O₃-SiO₂, PbO-GeO-SiO₂, Ge-Te-Sb, or Ge-Te-As.

6. The method for forming a phase separation region according to Claim 1, wherein the pulse width of the laser is between 10 femtoseconds and 10 picoseconds, and the wavelength of the laser is different from that of the intrinsic absorption of the glass.
